(19) Europäisches Patentamt / European Patent Office / Office européen des brevets

(11) **EP 4 280 125 A1**

(12) **EUROPEAN PATENT APPLICATION**

(43) Date of publication:
**22.11.2023 Bulletin 2023/47**

(21) Application number: **22174051.7**

(22) Date of filing: **18.05.2022**

(51) International Patent Classification (IPC):
**G06Q 10/00** (2023.01)     **F24H 1/00** (2022.01)
**F24D 10/00** (2022.01)     **G06Q 50/06** (2012.01)

(52) Cooperative Patent Classification (CPC):
**G06Q 10/20; G06N 3/08; G06Q 50/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VITO NV**
**2400 Mol (BE)**

(72) Inventors:
• **VANHOUDT, Dirk**
  **B-2400 Mol (BE)**
• **AL KOUSSA, Jad**
  **B-2400 Mol (BE)**

(74) Representative: **V.O.**
**P.O. Box 87930**
**2508 DH Den Haag (NL)**

(54) **A METHOD AND SYSTEM FOR DETECTING OPERATIONAL IRREGULARITIES IN A THERMAL ENERGY EXCHANGE SYSTEM, AND A METHOD OF TRAINING A MACHINE LEARNING MODEL**

(57)     A method and system for detecting operational irregularities in a thermal energy exchange system. Thermal energy exchange system comprises a first side, a second side and an interface between the first side and the second side. Heating/cooling is generated at the first side upstream to the interface, and heating/cooling is consumed at the second side downstream to the interface. The interface is provided by means of a plurality of substations connected to the first side and the second side, each substation being configured to facilitate thermal energy exchange between the first side and the second side. Measurement data indicative of one or more operational parameters of the first side is obtained, wherein the measurement data is collected by means of a measurement system. The measurement data is monitored so as to identify operational irregularities at the interface and/or the second side.

FIG 2

**Description**

FIELD OF THE INVENTION

The invention relates to a computer implemented method for detecting operational irregularities in a thermal energy exchange system. Further, the invention relates to a system for detecting operational irregularities in a district thermal energy exchange system. Furthermore, the invention relates to a computer implemented method for training machine learning models each associated to a substation of a thermal energy exchange system with a plurality of substations for facilitating thermal energy exchange. Also, the invention relates to a computer program product.

BACKGROUND TO THE INVENTION

A thermal energy exchange system is widely used for transferring heat/cooling produced at one or more locations to one or more heat/cooling demand locations. For example, the thermal energy exchange system may be a district heating/cooling system (cf. collective heating/cooling) that is configured to produce heat/cooling in order to meet the heat/cooling demand, usually of multiple customers at other locations. For example, thermal energy can be transferred using a medium (e.g. water based) circulating in a pressurized piping system. The heat demand may include space heating demand as well as domestic hot water demand for sanitary purposes for residential and/or commercial buildings.

Heat may be produced at a heat production subsystem. The heat can be distributed/transported by means of a heat distribution system. Furthermore, (customer) substations can be provided each configured to transfer the heat from the heat distribution pipes to an internal heating system. The internal heating system may include space heating and hot water demand circuits.

The (district) heating/cooling network can be a collective network supplied by a multitude of sources such as fossil fuel based boilers as well as more sustainable sources such as excess heat from industrial processes and combined heat and power plants based on biomass or waste incineration, geothermal heat and solar thermal heat. Moreover, large-scale heat pumps can be used as a heat source providing the possibility to increase the flexibility of the energy system by integrating the heating and electricity sectors. Additionally or alternatively, cooling sources may be provided, for example using heat pumps.

In existing thermal energy exchange systems such as district thermal energy systems, multiple components can perform sub-optimally leading to inefficiency in the operation of the system due to an increase in the system's temperatures. For example for district heating, customers' installations are one of the major components that can perform sub-optimally, causing increased return temperatures to the heating system of a heat exchange system and consequently either the flow or the primary supply temperature from the side at which heating is generated need to be increased to provide the needed heat. Similarly, for district cooling, decreased return temperatures may be obtained due to sub-optimal performance of one or more installations. The customer's installation may include the substation, and the space heating and domestic hot water demand systems. The substation may include a combination of heat exchangers, valves, sensors, actuators, control and a heat meter. The space heating and domestic hot water system may include a number of valves, radiators and heat exchanger. The faults in the customer installations may occur in a number of different components and include problems such as fouling of heat exchangers, broken temperature sensors, control valves stuck in an open position, temperature sensors placed on the wrong pipe, domestic hot water circulation connected before the pre-heater, high return temperatures from the customer's internal heating system, and high set point values in the customer system. All of these operational irregularities may not be seen as an actual fault where something is broken, but they can lead to high return temperatures to the side where heating is generated and low return temperatures to the side at which cooling is generated.

The substations may have a large impact on the thermal energy exchange system's temperature and its efficiency. The performance of the thermal energy exchange system can be significantly improved by effectively guaranteeing a normal operation of the substations. In order to decrease the system's temperatures to increase the efficiency and integrate low temperature renewable heat sources, it is of great importance to effectively detect (and correct) faulty units/subsystems in the thermal energy exchange system.

It can be unpractical to model the thermal energy exchange system of an entire city, for example employing white box models. Conventionally, the poorly performing installations are detected using manual analysis methods. However, given the large number of substations that might be present in a thermal energy exchange system network (e.g. district heating), the manual approach can be very time consuming and costly. For this reason, there is a need for more cost-effective and less labor-intensive approach to help in the fault detection process.

There is a need to effectively increase energy efficiency, heating/cooling source flexibility and/or the capability of utilizing residual heat, in thermal energy exchange systems.

SUMMARY OF THE INVENTION

It is an object of the invention to provide for a method and a system that obviates at least one of the above mentioned drawbacks.

Additionally or alternatively, it is an object of the invention to improve the detection of operational irregularities in a thermal energy exchange system.

Additionally or alternatively, it is an object of the invention to more accurately and/or robustly detect faults in a thermal energy exchange system.

Additionally or alternatively, it is an object of the invention to provide for an efficient and cost-effective method of detection operational irregularities in a thermal energy exchange system.

Thereto, the invention provides for a computer implemented method for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of a plurality of substations connected to the first side and the second side, each substation being configured to facilitate thermal energy exchange between the first side and the second side, wherein the method includes: obtaining measurement data indicative of one or more operational parameters of the first side, wherein the measurement data is collected by means of a measurement system; and monitoring the measurement data so as to identify operational irregularities at the interface and/or the second side.

Data from the first side of the substation can be monitored. By analyzing the data on the first side of the substation, irregularities can be identified occurring within the components of the substation, and/or components which are connected to the substation at the second side (cf. downstream). The second side connected to the substation may for instance be a heating system of the consumer/building.

The first side may be arranged to provide for heating/cooling generation and distribution/transmission of heating/cooling. The first side may include pipes that enable heat/cooling transfer from the generation towards the second side via the interface. The interface may include units arranged between the first side and the second side. The second side may include for example an internal heating system of a building.

For exemplary district/collective heating, an anomaly or a fault associated to a substation can lead to an increase in the upstream return temperature (at first side) of the thermal energy exchange system. As a result, the return temperature can be higher than a target return temperature. Such a higher return temperature results in a decrease in the overall efficiency and an increase in the operational costs. If the return temperature is too high, e.g. substantially higher than the target temperature), the heat losses may be significantly higher. Moreover, a lower (upstream) return temperature at the first side may improve the energy efficiency of production units at the first side (cf. production side). For example, a lower return temperature may increase the efficiency of a heat recuperation system arranged at the production side. For exemplary district/collective cooling, the target return temperature may be lower than a target return temperature.

For exemplary district/collective heating, a higher return temperature detected at the substation can be due to the substation and/or one or more internal issues in the building. Hence, the operational irregularity may occur in the substation and/or beyond, e.g. faults in the building installation connected to said substation. The faults in the substation may be related to issues with components of the substation, such as for example malfunctioning sensors, valves, actuators, heat exchanger(s), etc. The faults in the building installation may for instance be the result of hydraulic problems, malfunctioning components (e.g. valves, controllers, thermostat, etc.), improper dimensioning of radiators, etc.

It will be appreciated that for district/collective heating it can be desired to have the return temperature at the first side as low as possible, e.g. close to a first target temperature. However, for district/collective cooling, the opposite is the case wherein it is desired to have the return temperature at the first side to be as high as possible, e.g. close to a second target temperature. In this way, the efficiency of the thermal energy exchange system can be improved. An anomaly and/or irregular operation of a district/collective heating system (cf. thermal energy exchange/transfer system) can lead to a return temperature that is higher than the first (preset) target return temperature at the first side. Similarly, an anomaly and/or irregular operation of a district/collective cooling system (cf. thermal energy exchange/transfer system) can lead to a return temperature that is lower than the second (preset) target return temperature at the first side.

Optionally, the method includes: performing a cluster based processing in which the plurality of substations are grouped in clusters according to one or more predetermined criteria, ranking the plurality of substations in accordance with a set of key performance indicators, and selecting a first set of substations corresponding to worst-performing substations in the ranking of substations; and performing an instance based processing in which each substation is modelled by means of a trained machine learning model, wherein the trained machine learning model is configured to provide a predicted output based on one or more inputs indicative of measurements, wherein the predicted output of the trained machine learning model is compared to a measured output, and wherein a second set of substations are selected for which the difference between the predicted output and the measured output exceeds a predetermined threshold value; and wherein substations present in the first set of substations and/or the second set of substations are identified as substations being associated to at least one faulty subsystem, the at least one faulty subsystem being located in the substation itself and/or at the second side connected to the substation.

The combined cluster based approach and instance based approach in the method according to the disclosure can significantly improve the detection of operational irregularities.

The cluster based processing can be employed in order to provide for an indication whether the substation is operating normally (i.e. as expected). Based on this indication the training and/or further adaptation of the machine learning model in the instance based processing can be performed. For example, if one of the substations is detected to operate irregularly (e.g. perform poorly) by means of the cluster based processing, it can be first repaired. Consequently, the output will change when said substation is repaired. Hence, the measurements will be correct, and the model in the instance based method can be trained correctly.

In the cluster based approach, substations can be grouped or clustered according to a certain criteria (power profile, supply temperature, etc.). This may involve a statistical analysis, wherein the substations of the thermal energy exchange system are clustered and ranked for a set of key performance indicators (KPIs), i.e. performance ranking. The worst performing ones are selected and/or identified as probably being associated to an operationally faulty component (at the substation itself or beyond).

In the instance based approach, it is predicted how the substation would be performing given a set of input data. The output (cf. prediction) of the instance based model (i.e. trained data driven model) can be compared to the actual measurements. If there is a deviation, it can be concluded that something is wrong at the substation and/or beyond (cf. at the second side).

Advantageously, the method can improve the operation and reduce and/or avoid extended operational irregularities associated to substations of the thermal energy exchange system, thereby keeping the return temperature as close as possible to the target temperature.

It will be appreciated that trained models can be further adapted based on ongoing monitoring data.

Data may be provided by energy meters, for example arranged at or approximate each substation. The energy meter may be configured to provide an indication of an amount of energy consumed. Typically, energy meters are installed in district heating systems, hence, the arrangement of additional sensors may not be required. In some examples, solely data obtainable from energy meters is used. For example, the energy meters may provide data indicative of a supply temperature (e.g. upstream temperature entering the district heating substation from the district heating network), data indicative of a return temperature (cf. temperature leaving the district heating substation to the district heating network), data indicative of a flow that is passing through the district heating substation on the first side (cf. flow on the upstream side, i.e. entering the substation), data indicative of an accumulated flow (cf. volume of medium that has passed), data indicative of an accumulated energy (e.g. calculated based on an accumulated flow and dT).

The energy meters may be automatic meters which can automatically gather and transmit information to a processing unit (e.g. every hour, every 30 minutes, every minute, etc.).

An input data can be provided to a preprocessor or data handler. The preprocessor may be configured to convert the data in a predetermined format, resolve issues in the data, clean up the data, report anomalies in the data, etc.

Optionally, substations present in both the first and second set of substations are identified as substations being associated to at least one faulty subsystem, the at least one faulty subsystem being located in the substation itself and/or at the second side connected to the substation.

Optionally, the machine learning model associated to each substation is trained with historical data captured in one or more time intervals in which said substation is not present in the first set of substation.

The instance based processing may train models based on certain historical data. However, it is not known if the historical data is representative of the correct operation of the substation and units at the second side connected to said substation. Advantageously, the cluster based processing is used to identify substations that are likely faulty and/or operating inefficiently compared to other substations. The at least one faulty subsystem that is causing this can be located in the substation itself and/or at the second side connected to the substation (i.e. downstream beyond the substation). By employing the cluster based processing, it can be better guaranteed that correct historical data is used for training models in the instance based processing. It can be effectively determined whether the historical data used for training machine learning models is linked to a normal/regular operation. The cluster based and instance based processing thus synergistically work in parallel for improving the detection of operational irregularities in the thermal energy exchange system.

In advantageous examples, if the instance based model used for the instance based processing is trained using correct training data (cf. at least partially validated using the cluster based processing), the faulty subsystems linked to substations located in the first set identified in the cluster based processing can be monitored more reliably using the instance based processing.

Optionally, the predicted output used in the instance based processing is associated to a return temperature of heat transfer medium leaving the relevant substation towards the first side.

Optionally, the trained machine learning model is a grey box model trained by means of historical data associated to the relevant substation.

The grey box model can be a data driven model trained using historical data. The grey box model may be configured to model the substation itself and the part (e.g. building) that it is connected to. In some examples, the grey box model is a twin/meta model of the substation and beyond, wherein the model includes parameters which can be trained using historical data. The grey box model can be computationally less intensive compared to other models. Furthermore, the grey box model can be effectively applied for a large amount of substations and units at the second side (e.g. heating installation beyond the substation, building, etc.) connected to said substations.

Advantageously, in some examples, it is possible to validate the instance based model (e.g. grey/black box statistical model) using the cluster based processing, wherein only historical training data is used when the cluster based processing did not detect a faulty, incorrect, anomalous and/or suboptimal operation. The combined cluster based processing and the instance based processing (e.g. separate methods performed in parallel) can substantially improve the detection of faulty subsystems. A more accurate instance based processing can be performed, and the instance based processing may provide for a faster detection of faulty subsystems being located within substations and/or at the second side connected to substations.

Optionally, the grey box model includes an equivalent lumped circuit model with training parameters, such as an equivalent resistance-capacitance (RC) circuit model, wherein the equivalent lumped circuit model is employed for modelling heat exchange at at least one building at the second side.

The RC model can be associated to a building/construction downstream the substation (cf. second side). Radiators can be modelled by means of a heat exchanger model. A combination of heat exchanger model and RC model is also envisaged.

Optionally, the grey box model includes a heat exchanger model with training parameters, wherein the heat exchanger model is employed for substation modelling.

In some examples, the buildings are modelled using an equivalent lumped circuit model comprising a capacity and resistance. The capacity may correspond to the ability of the building to contain heat. The resistance may correspond to the ability to lose the heat to the environment (cf. depends on the insulation of the building). The building may thus be represented by (optionally equivalent) physical properties. Historical sensory/measurement data may be used for training parameters of the model. The resulting grey box model best represents what the building does. The trained grey box model can be used for simulating the return temperature from the building (and compare this to the measurement of the return temperature). The deviation between the simulated value and measured value (return temperature) can be used to indicate whether an operational irregularity is likely occurring and/or has likely occurred. For example, when the deviation exceeds a predetermined threshold, it can be derived that the grey box model indicates that there is something wrong. This is applicable for both collective/district heating and collective/district cooling.

In some examples, the grey box model has the supply temperature to the building, flow rate going into the building, the outdoor temperature and the indoor temperature as input, and provides the return temperature as the output. However, various other input/output parameters can be used.

In some examples, buildings are modelled by means of a RC model. The heating installation may be represented by means of a (simplified) radiator model. Alternatively, also data driven models can be used for modelling the buildings. The substation can be modelled by a heat exchanger model.

Optionally, the one or more inputs include at least one of a supply temperature of heat transfer medium entering the relevant substation, a flow rate of heat transfer medium exchanged with the relevant substation, an indoor temperature of a building at the relevant substation, or an outdoor temperature.

Optionally, the trained machine learning model is a black box model.

The black box can be a data driven machine learning model. It will be appreciated that various machine learning models can be used, for example artificial (deep) neural network models (cf. multilayer perceptron), linear regression models, logistic regression models, decision tree models, support-vector machine models, etc.

In some examples, the cluster based processing identifies substations not present in the first set of substations. Historical data may be still collected for these substations, not listed in the first set, such that the black box machine learning model employed in the instance based processing can be (further) trained. In this way, it can be guaranteed that correct historical data is used for training the black box machine learning model in the instance based processing. With other words, the cluster based processing can provide an indication based on the ranking whether historical data in certain time periods can be used for the training the black box machine learning model utilized in the instance based processing. Moreover, a more robust fault detection can be obtained by performing the cluster based and the instance based processing in parallel.

Optionally, the predetermined criteria include at least one of a thermal power profile, supply temperature of heat transfer medium, or return temperature of heat transfer medium.

The return temperature may be the temperature of the heat transfer medium leaving the interface/substations in the thermal energy exchange system being guided back to the first side. The power profile may be indicative of a change of an amount of thermal power consumed over a period of time. It will be appreciated that the heat transfer medium may be a thermal energy transfer medium used for transferring heating/cooling.

The predetermined criteria may be related to one or more performance indicators. The performance indicator may for example be data indicative of a temperature difference between the supply temperature and the return temperature. For example, based on the ideal temperature difference, it is possible to estimate an ideal amount of cubic meters of fluid that is expected to have passed through the substation. The actual flow can be compared to the ideal flow that is expected and the difference may be used as a performance indicator. Additionally or alternatively, various other performance indicators may be used, for example: data indicative of how much flow is used per kWh, the return temperature according to how much energy that is being provided, indicators of efficiency of the heat transfer, etc.

The cluster based processing may employ a cluster generator configured to create clusters of substations. The substations may be grouped based on certain criteria (e.g. primary supply temperature level). For example, the substations may not all have the same supply temperature due to the distance between the production and consumption side (cf. heat losses). Substations that are closer to the production side (i.e. heat source) may have a higher supply temperature, and substations that are farther away from the source may have a lower supply temperature. The supply temperature may affect what the return temperature is. It provides a way to fairly compare substations. Additionally or alternatively, it is also possible to perform clustering based on heat load profile. Different types of buildings (e.g. apartment, single family house, warehouse, etc.) may have different heat demand profiles.

The performance of substations and beyond (second side) can be quantified using various key performance indicators. The key performance indicator(s) can be used for determining a ranking. In the ranking, the worst performing substations and beyond (e.g. 15 percent, 10 percent, etc.) can be considered to have a higher risk of operating irregularly. A group of substations can be identified which behave differently with respect to the behavior of the rest of the group. The substations can be tracked and the movement between clusters may also be taken into account. For example, consumer behavior may affect the clustering.

The cluster based processing can handle a large number of substations. For example, hundreds or even thousands of substations and units at the second side connected thereto in a district/city can be evaluated. The substations and units associated thereto can be compared amongst each other to obtain a relative ranking, wherein the worst performing data points may indicate an irregular operation of a respective substations and/or units associated thereto (at the second side).

The cluster based and instance based processing can be performed in parallel.

Optionally, cluster based processing is performed periodically, and wherein the instance based processing is performed continuously.

In some examples, the cluster based processing is based on historical data and is evaluated on periodic basis, for instance evaluated e.g. weekly or monthly. More frequent re-evaluation can be performed after a repair and/or maintenance action has been carried out. The cluster based processing may be carried out less frequently than the instance based processing, as it may require sufficient historical data for identifying trends or changes in the data. The instance based processing may be employed for a quasi-continuous or continuous evaluation (significantly more frequent than cluster based processing).

The cluster based processing tracks the performance of each substation and the second side connected to each substation. Advantageously, at least initially during training, the results of cluster based processing can provide an indication whether the substation and beyond (cf. second side connected thereto) are operating within normal target parameters (e.g. as expected). Based on this indication, the historical data used for training can be selected. Data being captured during irregular operation of the substation or beyond identified by the cluster based processing is not used for training the model(s) in the instance based processing. The cluster based processing provides an advantageous way to improve the data driven modelling in the instance based processing. In some examples, if the models in the instance based modelling are correctly trained, the detection of operational irregularities in the thermal energy exchange system can be performed primarily based on the instance based processing, which provides for a highfrequency and/or (quasi-)continuous evaluation.

Optionally, the thermal energy exchange system is a district thermal energy exchange system configured to provide a collective and/or centralized heat production network for the plurality of substations.

Optionally, the thermal energy exchange system is provided with at least two substations, preferably at least ten substations. The system may be easily scalable and a large number of substations may be employed.

In some examples, the thermal energy exchange system comprises at least 50 substations, or even at least 200 substations. The method and system according to the disclosure can also be used for larger systems, for instance having more than 500 substations.

According to an aspect, the invention provides for a system for detecting operational irregularities in a district thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of a plurality of substations connected to the first side and the second side, each substation being configured to facilitate thermal energy exchange between the first side and the second side, wherein the system comprises a processing unit configured to: obtaining measurement data indicative of one or more operational parameters of the first side, wherein the measurement data is collected by means of a measurement system; and monitoring the measurement data so as to identify operational irregularities at the interface and/or the second side.

The system provides for an effective and robust fault detection in the thermal energy exchange system with multiple substations. The method provides for an automated statistical and machine learning based analysis technology for fault detection and diagnosis in (district heating and/or cooling) substations and beyond. It can be used by operators of the thermal energy exchange system in order to detect anomalies, faults, and/or inefficiencies in substations and beyond, for the purpose of performing predictive maintenance. In this way, potential costly breakdowns of the system can be avoided. Furthermore, a considerable increased in the return temperature can be prevented, thereby avoiding inefficiencies of the thermal energy exchange system (e.g. district heating system). An increase in the operational costs can be further avoided, resulting in a more cost-effective solution.

In some examples, the thermal energy exchange system comprises a heat production side at which heat is produced, and a heat distribution part which includes a set of members (e.g. pipes, pumps, etc.) for distributing heat from the production side to consumption side. A customer installation may include substations and an internal heating system. The internal heating system can for example be employed for space heating (to heat the space) and domestic hot water usage. The substation can act as an interface between the district heating distribution and the customer. For example, the substations may include one or more heat exchangers, valves, pipes, controllers, that are used for supplying the required heat to the customer side (transfer heat from first side to second side).

If the return temperature from the substations back to the first side is increased, more flow is needed in order to provide the same energy. The pumping costs can also increase as a result. A higher return temperature can thus be detrimental and is to be avoided. One of the ways to tackling that, is to improve the operation and reduce and/or avoid anomalies in the substations of the thermal energy exchange system.

Optionally, the processing unit comprises: a cluster based processing module configured to group the plurality of substations in clusters according to one or more predetermined criteria, to rank the plurality of substations in accordance with a set of key performance indicators, and to select a first set of substations corresponding to worst-performing substations in the ranking of substations; and an instance based processing module configured to model each substation by means of a trained machine learning model, wherein the trained machine learning model is configured to provide a predicted output based on one or more inputs indicative of measurements, wherein the instance based processing module is configured to compare the predicted output of the trained machine learning model to a measured output, and to select a second set of substations for which the difference between the predicted output and the measured output exceeds a predetermined threshold value; and wherein the processing unit is configured to identify substations present in the first set of substations and/or the second set of substations as substations being associated to at least one faulty subsystem, the at least one faulty subsystem being located in the substation itself and/or at the second side connected to the substation.

The cluster based processing and the instance based processing can be carried out in parallel. In some examples, based on the cluster based processing it is determined whether historical data in time periods are usable for training the machine learning model employed in the instance based processing. When no faults/suboptimal operation has been detected by the cluster based processing in some time periods, the historical data in these time periods can be used for (further) training the machine learning model employed in the instance based processing.

The instance based processing can faster detect subsystems having a faulty, incorrect, anomalous and/or suboptimal operation, however, the robustness of the identification of such subsystems can be enhanced by the two processing methods working together (and being carried out in parallel). It can be better verified whether the instance based model has been trained using valid historical data (with the subsystems operating normally). The two coupled processing steps of the method of the disclosure can thus synergistically improve the detection of operational irregularities in the thermal energy exchange system.

The instance based processing may model each substation and beyond individually. The cluster based processing may involve taking into account a group of substations. In the cluster based processing, some changes in the thermal energy exchange system (e.g. collective district heating system) that affect all the substations and beyond can be better detected. With other words, the use of the combination of cluster based processing and instance based processing can effectively provide for additional insights that can be used for fault detection.

According to an aspect, the invention provides for a computer implemented method for training machine learning models each associated to a substation of a thermal energy exchange system with a plurality of substations for facilitating thermal energy exchange, wherein each trained machine learning model is a twin model configured to provide a predicted output based on one or more inputs indicative of measurement data, wherein the predicted output of each trained machine learning model is to be compared to a measured output associated to the relevant substation, wherein the method includes grouping the plurality of substations in clusters according to one or more predetermined criteria, ranking the plurality of substations in accordance with a set of key performance indicators, and selecting a first set of substations corresponding to worst-performing substations in the ranking of substations, and wherein training the machine learning models is performed with historical data captured in one or more time intervals in which said substation is not present in the first set of substations.

Advantageously, it can be effectively avoided that data-driven models are trained with historical data linked to an irregular operation. This can be prevented by using results from the cluster based processing in which a ranking is made of all substations based on their performance. If, based on the ranking, one of the substations is identified as an irregular substation (selection), historical data obtained during such indication of irregular operation is not used for training the model in the instance based processing. If the substation is identified as a regular substation in the cluster based processing, historical data can be effectively used for training the model in the instance based method.

According to an aspect, the invention provides for a computer program product configured for performing, when run on a processing unit, the steps of the method of the disclosure.

It will be appreciated that the operational irregularities may relate to operational faults, inefficiencies, or the like, in the substations and beyond said substation (cf. components/units arranged after the substation at the second side). The irregularities may for example be the result of faults in one or more components of the substations, in one or more components at the second side coupled to the respective substations (e.g. irregularity of heating system of the consumer such as a radiator, etc.).

It will be appreciated that the thermal energy exchange system may be a collective heating and/or cooling system. The thermal energy exchange may involve heat/cooling exchange.

It will be appreciated that any of the aspects, features and options described in view of the method apply equally to the system and the described method of training. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of an embodiment of a method;
Fig. 2 shows a schematic diagram of an embodiment of a system;
Fig. 3 shows a schematic diagram of an embodiment of a system;
Fig. 4 shows a schematic diagram of a flow chart;
Fig. 5 shows a schematic diagram of a graph;
Fig. 6 shows a schematic diagram of a graph;
Fig. 7A, 7B show a schematic diagram of a graph; and
Fig. 8A, 8B show a schematic diagram of a graph.

DETAILED DESCRIPTION

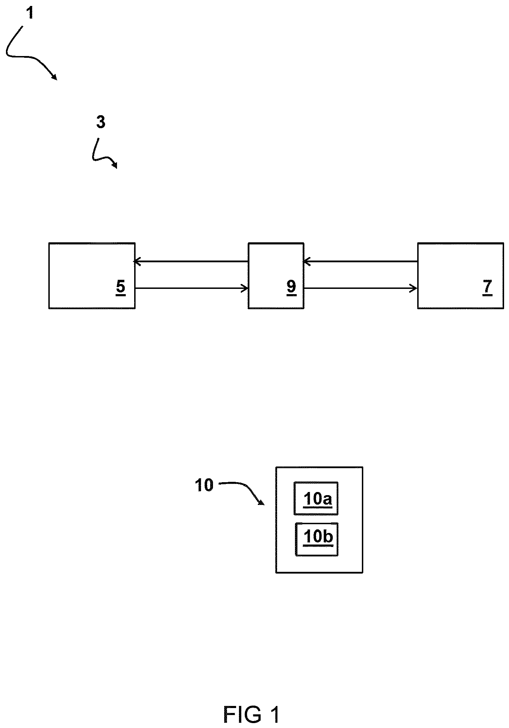

Fig. 1 shows a schematic diagram of an embodiment of a system 1 for detecting operational irregularities in a district thermal energy exchange system 3. The thermal energy exchange system 3 comprises a first side 5, a second side 7 and an interface 9 between the first side 5 and the second side 7. Heating and/or cooling is generated at the first side 5 upstream to the interface 9, and heating and/or cooling is consumed at the second side 7 downstream to the interface 9. The interface 9 is provided by means of a plurality of substations connected to the first side 5 and the second side 7, each substation being configured to facilitate thermal energy exchange between the first side 5 and the second side 7. The system 1 includes a processing unit 10 configured to: obtaining measurement data indicative of one or more operational parameters of the first side 5, wherein the measurement data is collected by means of a measurement system. Furthermore, the processing unit 10 is configured to monitor the measurement data so as to identify operational irregularities at the interface 9 and/or the second side 7.

The faulty subsystem may be arranged in the substation and/or at the second side connected to the substation, for example in a building downstream the substation at the second side. Hence, the operational irregularity may be directly (e.g. component of substation) or indirectly (e.g. component at the second side coupled to the substation) associated to relevant substation. The irregularity may be associated to a subsystem at and/or downstream of the substation (i.e. second side).

The method enables a robust and reliable operational fault detection associated to substations in the thermal energy exchange system. Advantageously, the detection of operational irregularities can be effectively used by operators to efficiently detect anomalies and inefficiencies as well as predicting maintenance requirements. In this way, costly breakdowns and considerable increase in the return temperature can be avoided, leading to an increased thermal energy exchange/transfer (cf. heating/cooling) efficiency and a reduction in operational and maintenance costs while maintaining customer comfort.

Anomalies associated to substations of the thermal energy exchange system can lead to higher return temperatures of the fluid being guided back to the first side providing for heating/cooling (cf. production side). The higher return temperatures can lead to a decrease in energy efficiency and thus increased costs. The method can improve the detection of operational irregularities, and thereby result in decreased heat/cooling production costs (e.g. reduced pumping costs due to lower flow rates of fluid, reduced costly technical interventions, etc.), and thus decreased energy costs for consumers.

Various operational irregularities may be detected. For example, the operational irregularity can be the result of a fault/anomaly in the building installation, such as for instance due to improper dimensioning of the building installation, hydronic issues, malfunctioning components (e.g. thermostatic radiator valves, thermostats), etc. For example, the operational irregularity may be the result of a fault/anomaly in the district heating substations, such as for instance due to malfunctioning components (sensors, valves, heat exchangers, etc.), incorrect designed components, inappropriate settings in substation controller, improper dimensioning of substation, etc.

In some examples, optionally, the processing unit 10 comprises: a cluster based processing module 10a configured to group the plurality of substations in clusters according to one or more predetermined criteria, to rank the plurality of substations in accordance with a set of key performance indicators, and to select a first set of substations corresponding to worst-performing substations in the ranking of substations; and an instance based processing module 10b configured to model each substation by means of a trained machine learning model, wherein the trained machine learning model is configured to provide a predicted output based on one or more inputs indicative of measurements, wherein the instance based processing module 10b is configured to compare the predicted output of the trained machine learning model to a measured output, and to select a second set of substations for which the difference between the predicted output and the measured output exceeds a predetermined threshold value; and wherein the processing unit is configured to identify substations present in at least one of the first set of substations or the second set of substations as substations being associated to at least one faulty subsystem, the at least one faulty subsystem being located in the substation itself and/or at the second side connected to the substation.

The fault detection may involve detecting a deviation from expected performance of a customer's installation. Optionally, a subsequent fault diagnosis is carried out for identifying the cause(s) of the poor performance. Optionally, a subsequent fault correction is carried out for resolving the faults.

It will be appreciated that the cluster based processing may be understood as a group-based processing in which fault detection is carried out by clustering/grouping substations according to one or more predetermined criteria. The cluster based processing may involve statistical analysis and performance ranking of substations. In some examples, an automated limit checking is performed.

It will be appreciated that the instance based processing may be understood as a machine learning processing in which behavior of substations and beyond (downstream) are predicted using a machine learning model (e.g. grey box or black box machine learning model). Various statistical or data driven models can be employed. The output of the model (i.e. prediction) may be compared to measurements, and the deviation may be an indication of an operational irregularity.

From the cluster based processing, it can be identified that it is likely that at least one faulty subsystem is present in the thermal energy exchange system, the at least one faulty subsystem being located in an identified set of substations itself and/or at the second side connected to the identified set of substations. The subsystem can be subsequently repaired, reconfigured and/or corrected, and subsequent new (correct) historical data can be used for training one or more model(s) in the instance based processing. The cluster based processing may thus effectively guarantee that adequate training data is collected and used for performing machine learning training in the instance based processing.

The time period between subsequent processing steps may be different for the cluster based processing and the instance based processing. The instance based processing may be performed more frequently than the cluster based processing, for example 10 times more frequent, preferably at least 20 times more frequent, more preferably at least 30 times more frequent.

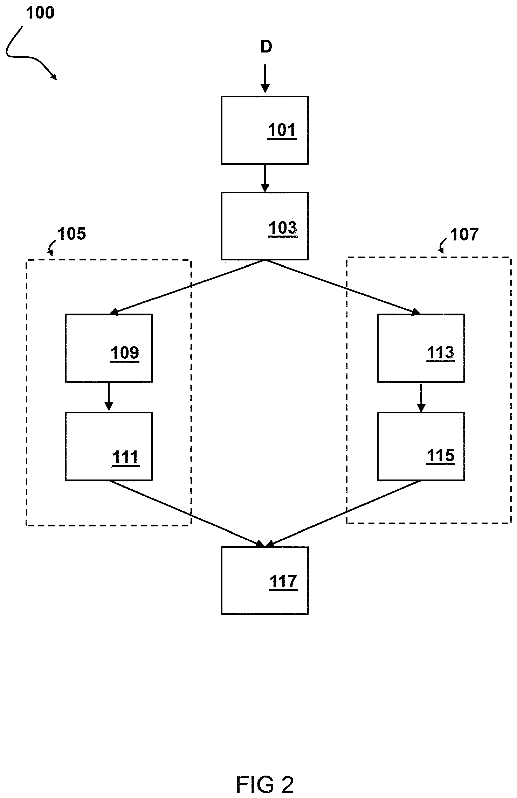

Fig. 2 shows a schematic diagram of an embodiment of a fault detection pipeline. In this example, measurement data D is received from energy meters and provided to a pre-processor 101. The pre-processed may be configured to pre-process the data. For example, the pre-processor may be configured to convert data to desired format, set all data to a same timestamp, standardize parameter names, standardize units, and/or remove duplicates.

Further, the pre-processed data may be provided to a data handler 103 configured to further handle the data. For example, the data handler 103 may be configured to check and correct and/or remove missing data, checking on illogical data, perform limit checking, handle abnormal quantization, calculate derived parameters, removal of substations with frequent violations, etc.

The processed input data can then be provided to a cluster based processing module 105, and an instance based processing module 107.

The cluster based processing module 15 includes a cluster generator 109 and a cluster evaluator 111. The cluster generator 109 can be configured to perform for example temperature level clustering. The substations can be clustered according to their supply temperature value. Additionally or alternatively, the cluster generator 109 may be configured to perform heat load profile clustering, wherein substations are clustered according to their heat load profile. The resulting clustering data from the clustering generator 109 can be provided to the cluster evaluator 111.

In some examples, the cluster evaluator 111 may be configured to apply an overflow method. The overflow method may involve comparing an actual flow with an ideal flow that is expected. For example, for a group/cluster of substations (e.g. which have supply temperature around 75 degrees Celsius), a certain temperature difference may be expected. By using the energy equation and based on the dT, an ideal value of flow (cubic meters) can be calculated, and this can be compared to the actual flow. The overflow may indicate the difference between the actually consumed flow and the flow to be consumed under ideal conditions. The ideal temperature difference dT can be preset, and based on this preset temperature difference and the energy consumption, the ideal flow can be calculated.

The cluster evaluator may be configured to calculate key performance indicators (KPIs) and perform a ranking accordingly. Substation movement between clusters can be tracked by monitoring the KPIs.

The cluster based processing module 105 may be configured to perform the evaluation on a periodic basis, for example weekly, or monthly. The cluster based processing module can effectively start processing based on any historical data available.

The instance based processing module 107 includes a substation and building model 113. The substation and building model 113 may be a black/grey box model of the substation and the building to predict its thermal behavior. The prediction can be provided to an evaluator 115 configured to compare the predictions to the actual measurements and evaluate the results, taking into account one or more predetermined deviation thresholds. The instance based processing module 107 may be configured to perform the evaluation on a continuous basis. The modeling may be based on historical data and is adapted according to ongoing monitoring.

In some examples, a reporter 117 is provided which can rank the substations according to the calculated KPIs and report the findings with regard to the detection of operational irregularities. For example, client-specific KPIs and performance curves may be generated by the reporter. This data may be accessed by users. In some examples, a continuous logging of actions taken and anomalies detected is performed.

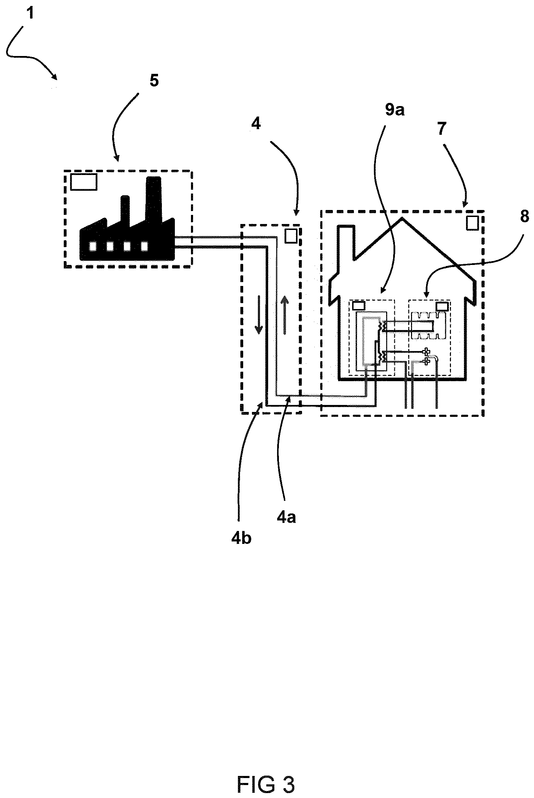

Fig. 3 shows a schematic diagram of an embodiment of a simplified district heating system 1. The system 1 comprises a first side 5, a second side 7, and a distribution arrangement 4. In this example, the first side corresponds to a heat production side, and the second side 7 corresponds to a customer installation. A (customer) substation 9a is arranged as an interface between the first side 5 and the second side 7. The substation 9a is connected to an internal heating system 8 of the building at the second side 7. In this example, the interface provided by the substation 9a is located at the second side (within the building). However, various other arrangements are possible. Line 4a guides the medium at a supply temperature coming from the production side. Line 4b guides the medium at return temperature exiting the substation, i.e. temperature of the medium at the first side of the substation 9a.

The irregularity may be the result of a faulty component of the substation 9a or a faulty component of a unit (directly or indirectly) coupled to the substation 9a further downstream (i.e. at second side), such as for instance the internal heating system 8.

EXPERIMENTAL RESULTS

In district heating or collective heating substations, components can fail or can be inappropriately installed or configured (e.g. valves get broken, heat exchangers get fouled, controller parameters are inappropriately chosen, heat exchanger wrongly connected, internal heating system problems, etc.). The result of these faults is a reduced cooling of the supply water, and as such higher than necessary return temperatures to the grid and higher volume flows (to deliver the same needed power) occur. In the below illustrated experimental results, two processing approaches for a fault detection routine for district heating substations are employed, based solely on the energy meter data, with an application on a real-life district heating network. The first approach is a cluster-based approach in which substations within the district heating are compared to each other using the overflow method and performance signatures to flag substations with sub-optimal performance compared to other substations in the network. The second method is an instance-based approach using a black-box model to predict the behaviour of the substation using an extended set of input variables and comparing the predictions to the measurements. The results from the two fault detection approaches show that both the cluster-based and the instance-based methods can detect deviating behaviors in district heating customer installations.

Fault detection and diagnosis (FDD) can be seen as a collection of methods to monitor a system's behaviour, to determine if a fault is present in the system, and to determine the characteristics and root cause of the detected fault(s). FDD can be applied in a variety of domains for fault detection and predictive maintenance.

The two processing approaching according to the disclosure can improve the detection of sub-optimally performing substations. The cluster-based processing compares substations to each other based on their historical data and the instance-based approach models substations using a machine learning model (e.g. black box or grey box model), and a deviation is detected by comparing the outcome of the model to the field measurements.

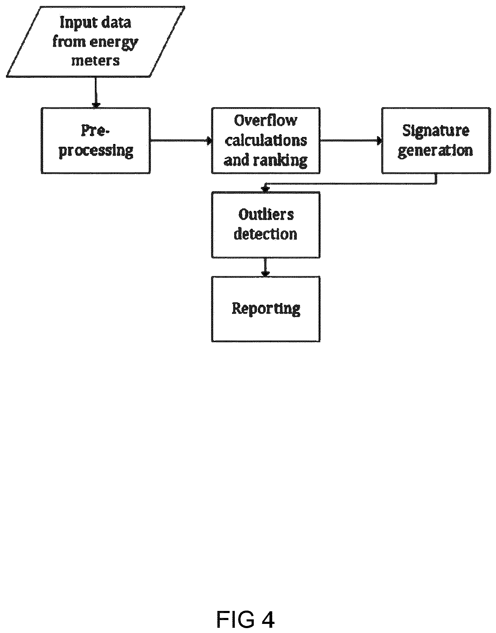

The cluster-based method compares substations within a group or a cluster of substations to find faulty or poorly performing substations. A schematic of the cluster based fault detection processing is shown in Fig. 4.

The data set used contained typical energy meter data, such as the accumulated energy consumption, the accumulated volume passing through the installation, the primary return temperature, and the primary supply temperature for a large number of installations (3 000 installations in this example).

First, a pre-processing and data handling is performed on the input data. During this step, the data is prepared and transformed into a suitable format for the data analysis step. Data processing may include several tasks, such as removal of duplicate values, feature extraction, and removal of outliers. In this first step, faults in sensors readings, communications and data logging can be detected. After that, data analysis is performed. Here, for each substation, an overflow value is calculated. The overflow represents the extra volume of water that passed on the first side of the substation during a certain period compared to an ideal calculated volume. This ideal volume is calculated based on an ideal cooling value of the primary temperature. The overflow (in m³) can be calculated using the following equation (Eq. 1):

$$V_{overflow} = V_{actual} - V_{ideal} = V_{actual} - \frac{E_{actual}}{\rho c_p \Delta T_{ideal}}$$

wherein:

$V_{overflow}$ = overflow volume (m³)
$V_{actual}$ = actual measured volume (m3)
$V_{ideal}$ = ideal volume (m³)
$E_{actual}$ = actual energy (J)
$\rho$ = fluid density (kg/m³)
$c_p$ = specific heat capacity (J/kg.K)

$\Delta T_{ideal}$ = ideal temperature difference between the primary supply temperature and return temperature (K).

The $\Delta T_{ideal}$ value varies depending on which DH system is being investigated. In this study, it was chosen to be 45 °C. As equation (1) shows, the lower the primary $\Delta T$, the higher the overflow. This is an indication that the customer's installation doesn't function optimally.

After the calculation of the overflow, a set of the substations with the lowest overflow values is picked and considered as the reference case: a representative set of the best performing substations. In this case, the top 25 % are considered for the reference case. Then, to determine from the remaining substations the poorly performing ones, three different criteria were used: the cooling performance, the return temperature level, and the energy consumed in the building. Two criteria were used to create two signatures: one cooling signature and one return temperature signature. The signatures consisted of a reference case and threshold values which were used for outlier detection. For each of the signatures, the reference case is determined by performing a piecewise linear regression on the reference substations chosen based on the overflow method. The mathematical relationship for a piecewise linear regression model with one breakpoint H is defined as follows (Eq. 2):

$$Y_i = \beta_0 + \beta_1 X_i + \beta_2 (X_i - H). I(X_i, H) + \varepsilon_i,$$

where $I(X_i, H) \begin{cases} 1, X_i > H \\ 0, X_i \le H \end{cases}$

In the equation, $\beta_n$ = 0, 1, 2 are the parameters of the regression model, $Y_i$ is the dependent variable being modelled, $X_i$ is the independent variable which is used to model the dependent variable, and $\varepsilon_i$ is the model error. In the cooling signature, the cooling of the substation was modelled as a function of the outdoor temperature. The breakpoint for the piecewise linear regression was determined by visually inspecting the data set.

Once the piecewise linear regression for the reference case is determined, the deviating, or outlier, values can be identified. The outliers were identified using the mean and the standard deviations of the reference case values. Values located at a distance larger than 3 standard deviations from the mean are considered as outliers. For the cooling, piecewise linear regression was used to model the mean of the reference case and so the thresholds were also linear. For the return temperature signature, the mean was modelled using a constant value, resulting in constant thresholds.

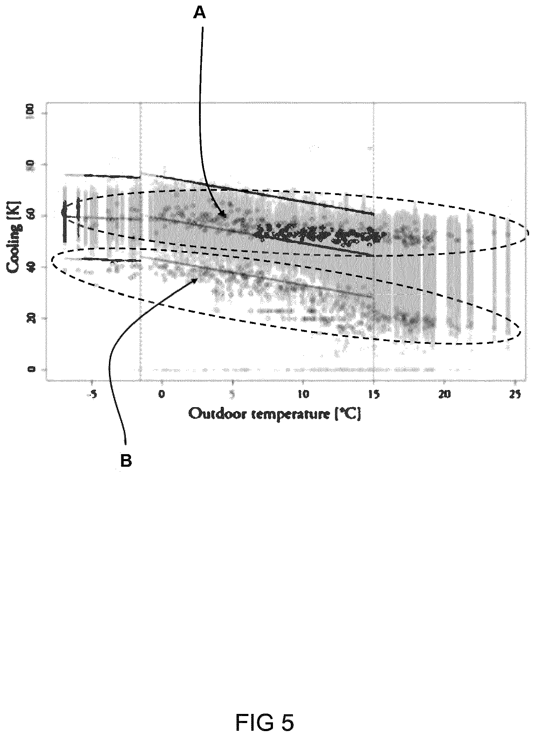

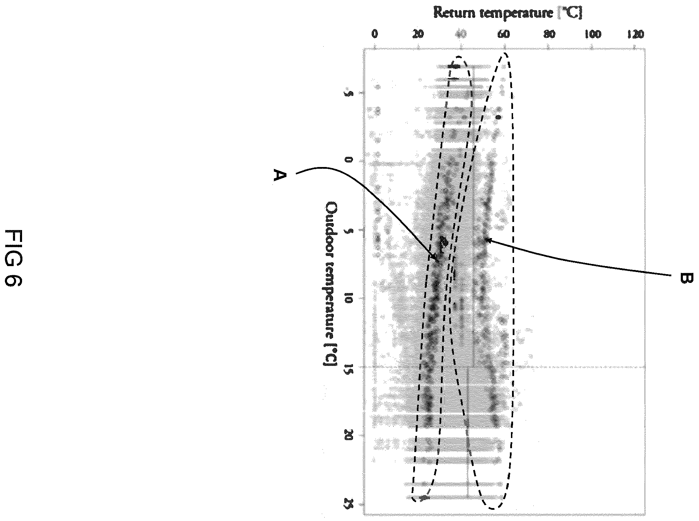

Fig. 5 illustrates a cooling signature with one well performing (adjacent circles A) and one poorly performing (adjacent circles B) installation represented. Fig. 6 illustrates a return temperature signature with one well performing (adjacent circles A) and one poorly performing (adjacent circles B) installation represented. As may be seen in the figures, the well performing installation has all its values located inside the thresholds, while the poorly performing installation has the main share of the values located outside of the thresholds.

The developed fault detection approach identified 1 273 installations as being poorly performing, which corresponds to approximately 43 % of the investigated installations. Table 1 presents the five installations that were identified as the substations that deviated the most from the expected behaviour.

Tab. 1 - The five substations with the highest overflows, and with outliers for both cooling and return temperature signatures.

| Subs # | 6 | 7 | 8 | 9 | 10 |
|---|---|---|---|---|---|
| ID | X54 | X93 | X45 | X41 | X21 |
| # of dT Outliers | 277 | 277 | 169 | 201 | 277 |
| # of Tr Outliers | 366 | 366 | 316 | 363 | 366 |
| $V_{overflow}$ (m$^3$) | 124 | 102 | 64 | 57 | 55 |
| | 581 | 885 | 824 | 121 | 927 |

In the instance based processing, a well-performing substation is modelled and then its performance is predicted based on subsequent input data. Any faults are then detected as deviations from the normal behaviour in the model predictions. The installation was selected from a data set of approximately 1 000 customer installations. First the overflows for all installations were calculated and then 10 installations with the lowest values of overflow were visually inspected to identify the best performing one.

The exemplary dataset used for the instance based processed consisted of hourly values for one year (November-November) from the energy meter of one district heating substation in a district heating system. The variables, or features, that were included in the dataset are: substation ID, average hourly outdoor temperature, hourly measurements of heat power consumption, mass flow, supply and return temperatures, as well as the average value of the outdoor temperature during the previous 24 hours.

An exemplary pipeline was employed, the pipeline including cleaning the data; performing data pre-processing comprising data standardization, polynomial features, robust feature scaling, feature selection; and modelling including using a gradient boosting regressor. A tree-based pipeline optimization (TPOT) was performed such as to optimize feature selection, feature pre-processing, feature construction, model selection, and parameter optimization, given a set of data without missing or mislabelled values.

To choose the best TPOT pipeline to be used, 16 different training sets and 16 different test sets were used to produce 16 different pipelines. These pipelines were then introduced to the same training set, to evaluate which pipeline to further test and evaluate in the study. Training sets and tests set are subsets of the input data, with the ration training over test set equal to 80/20. To evaluate the performance of the TPOT pipeline, the coefficient of determination (R2) and the Mean Absolute Error (MAE) were used. Eq. 3 shows how R2 is calculated. The closer R2 is to one, the better is the performance of the model.

$$R^2 = 1 - \frac{SS_{res}}{SS_{tot}}$$

wherein:

$SS_{res}$ = the sum of squares of the residuals
SStot = the total sum of squares, which is proportional to the variance of the data.

The mean absolute error, MAE, is the averaged sum of the absolute value of the residuals between actual values and predicted values, and can be calculated using Eq. 4 provided below. For a well performing model the MAE is expected to be as close to zero as possible.

$$MAE = \frac{1}{n}\sum_{i=1}^{n} |(actual\ value)_i - (predicted\ value)_i|$$

By investigating the values of MAE and R2 the most accurate TPOT pipeline was chosen.

After choosing the TPOT pipeline, a choice of the parameter to be predicted using the substation model must be made. For that, different combinations of input/output variables were tested. The performance of the models was evaluated using the R2 and MAE values. The results are shown in Table 2.

| comb | Input | Output | $R^2$ | MAE |
|---|---|---|---|---|
| 1 | $T_{out}$, $T_r$, $T_s$, t | $\dot{m}$ | 0.9703 | 0.1337 |
| 2 | $T_{out,24}$, $T_r$, $T_s$, t | $\dot{m}$ | 0.9555 | 0.2027 |
| 3 | $T_{out}$, $T_s$, t, $\dot{m}$ | $T_r$ | 0.8839 | 1.1091 |
| 4 | $T_{out,24}$, $\dot{m}$, $T_s$, t | $T_r$ | 0.8903 | 1.10348 |
| 5 | $T_{out,24}$, $T_s$, t, $T_{out}$ | $\dot{m}$ | 0.9740 | 0.1301 |
| 6 | $T_{out,24}$, $T_s$, t, $T_{out}$ | $T_r$ | 0.8841 | 1.0555 |
| 7 | $T_{out,24}$, $T_s$, t, $T_{out}$ | $T_r$, $\dot{m}$ | 0.9296 | 0.5857 |

Tab. 2 - Parameter combinations that were tested with the model.

Combination number 5, highlighted in grey, obtained the best R2 and MAE value.

To test the fault detection capability of the model, artificial faults were introduced to the data set. The model outputs for the faulty data sets were then compared to the outputs for the well-performing, original data set by calculating the hourly and accumulated residuals (rolling window of the previous 24 hours) between the model outputs and the actual measurements from the customer installation. By comparing these residuals to each other, it was possible to investigate whether the model performance changed when introduced to a data set containing faults.

Two faults were induced in the dataset. The first one represents a loss of communication between the energy meter and the database of the district heating utility. To handle this type of fault, the utilities usually replace the missing values by a constant value. In this case, a value of 60 °C was chosen and inserted randomly in the data set for the supply temperature. Since this was an extremely low value compared to the original dataset, another fault was also induced where the original value of the supply temperature was decreased by 10 %. The second type of fault was induced as a gradual change in output over a time period, representing a drifting meter. This was done for the outdoor temperature sensor as well as the supply temperature sensor. These two faults are a common occurrence in district heating metering data. In what follows only the results for a drifting meter will be presented.

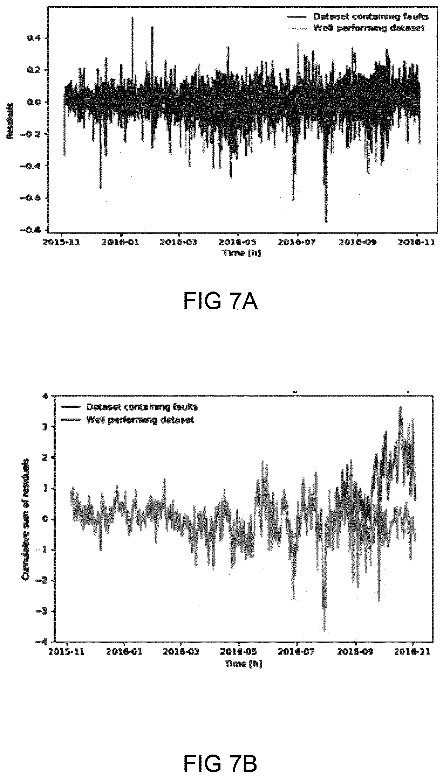

Fig. 7a, 7b illustrate an analysis of the residuals between the real and the predicted values for the data set without a fault and the data set with a drifting outdoor temperature meter. Fig. 7a shows residuals between real and predicted values as a function of time. Fig. 7b shows cumulative sum of residuals as a function of time.

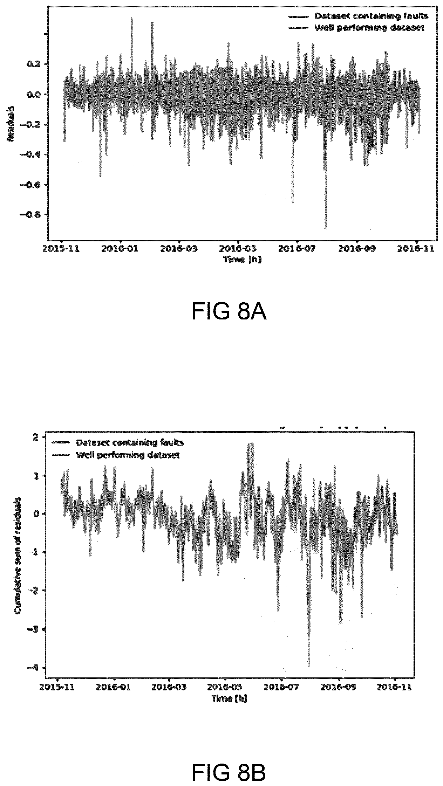

Fig. 8a, 8b illustrates an analysis of the residuals between the real and the predicted values for the data set without a fault and the data set with a drifting supply temperature meter. Fig. 8a shows residuals between real and predicted values as a function of time. Fig. 8b shows cumulative sum of residuals as a function of time.

Figs. 7 and 8 show two different residual plots for two of the faults investigated in the exemplary experiments:

the drifting outdoor temperature sensor (Fig. 7a, 7b) and the drifting supply temperature sensor (Fig. 8a, 8b).

Fig. 7a shows the residuals between the real values and the values that were predicted by the model. Fig. 7b shows the cumulative sum over a 24 h interval of the same residual values. As may be seen in Figure 7a, the model prediction changes when this fault is present in the data set, but the deviation is not clearly distinguishable. The cumulative sum of residuals in Fig. 7b displays a clear deviation approximately one month after the fault was induced in the data, indicating that this method may be well suited for automated detection of a drifting outdoor temperature meter.

Fig. 8a shows the residuals between the real values and the values that were predicted by the model. Fig. 8b shows the cumulative sum over a 24 h interval of the same residual values. As may be seen in Fig. 8a, the model prediction does not change significantly when this type of fault is present in the data set. This may also be seen in Fig. 8b.

The results from the two fault detection approaches show that both can detect deviating behaviours in district heating customer installations. The cluster-based method rapidly detects several installations that have a high overflow. Since a high overflow is an indication that the installation is not working as it should, this further implies that the cluster-based approach detects poorly performing installations.

For the instance-based approach, the model behaviour changes when a fault is present in the data, as may be seen in Figures 7a, 7b and 8a, 8b. This indicates that the method can detect the deviations induced in the data set. However, when analysing the results, it can be concluded that different faults have different impacts on the model performance. This is especially clear for the two faults that are related to drifting meters. Although the fault is the same (a gradual increase of the meter readings over time), a drifting outdoor temperature sensor in the meter readings has a much larger impact on the model performance than when a drifting supply temperature sensor is present. This may be seen in Figs. 7a, 7b and 8a, 8b. In Fig. 7b, the drifting outdoor temperature sensor causes the cumulative sum of residuals for the data set known to contain a fault to deviate from the expected behaviour soon after the fault has been induced in the data set. This shows that the model predictions have changed, thus indicating that a fault is present in the data set. When investigating the cumulative sum of residuals for the predictions of the drifting supply temperature sensor (Fig. 8b), it can be noticed that the deviation from the expected behaviour is not as large as for the data set in Fig. 7a, 7b. This indicates that the model used in the instance-based fault detection approach may not be able to detect all faults that are present in district heating customer installations. However, this also indicates that the method may be suitable for fault diagnosis as it seems to be capable of distinguishing between different faults.

The cluster based processing and the instance based processing are based on two different fault detection approaches. The cluster-based approach is based on a reference case of several installations, to which the behaviour of each individual installations is compared. This means that the method can be generalized between different installations and different district heating systems rather easily. The change that must be made when investigating a new district heating system is to change the reference case that the fault detection signatures are based on. However, the generality of the method may be a problem since the current method does not differentiate between different types of customer installations which may have a wide variety of different behaviours in terms of heat use, e.g., if comparing a school building to a single-family household. One way to solve this problem is to introduce another, initial step in the fault detection method, right after the data validation step. In this step, the buildings would be divided into smaller groups or clusters, representing different types of buildings (in terms of heat use). The fault detection method would then be applied to each of these groups. Another improvement on the method would be to introduce extra key performance indicators (KPIs) in addition to the absolute overflow calculated. For example, using a relative or an energy weighted overflow can enhance the accuracy of the method.

The instance-based approach uses the model of one installation. This means that one model for each installation in the district heating system should be developed to obtain a well-performing fault detection method. However, this may be a very time-consuming task that would have to be repeated each time a new customer installation is installed in the district heating system. One way to reduce the number of models needed could be to implement the same type of grouping of installation types as suggested for the cluster-based fault detection approach. The behaviour of each group would then be modelled in the way suggested in this paper. This approach would probably reduce the accuracy of the fault detection model, since the model of a group of installations will be less accurate for individual installations.

A natural step in the process of developing a fault detection method is to validate the results. However, obtaining such data sets may be challenging. Typically, district heating utilities do not log when a fault has occurred in their systems, only when they have corrected a fault. Neither do they connect the records of the corrected faults to deviations in customer data. This may be referred to as the lack of labelled data. Labelled data may in this case be described as data where a specific fault is known to have occurred at a specific time, in a specific customer installation. The lack of labelled data has made it challenging to validate the developed fault detection methods properly. The lack of labelled data also introduced a problem that may be present for both the cluster-based and the instance-based approach: how to know that the data from the installations represent a well performing installation that can be either modelled or included in the reference case. Since no labelled data is available, it may be that some installations that contain a fault today are included in the reference case for the cluster-based approach. It is also possible that some installations seem to be well performing since no larger deviations are present in the data set. However, they may in fact contain a fault that has been present during a long time, which makes it look like their "faulty" behaviour is their normal behaviour. Using the instance-based approach on such data sets would generate an incorrect model of the expected behaviour of the installation.

Advantageously, this can be overcome by identifying where faults are known to have occurred, at a specific time. It is also important to identify several installations that are known to not have had any faults during the same time. This would provide the possibility to validate the methods, and to make sure that they detect the installations that actually contained a fault during the investigated period of time. To also overcome the lack of labelled data, both methods can be used simultaneously by the district heating utility. Starting from historical data, the cluster-based approach can be used to gradually detect malfunctioning substations. It can be re-evaluated on a periodic basis, for instance monthly. The instance-based approach can be used in parallel. Given that the instance-based method uses historical data, it would not be known from the start if the behaviour modelled is for the well-behaving or faulty substation. For that, the cluster-based method can help. As a faulty substation is corrected, the model is recalibrated, and any further deviations can be an indication of a fault in the substation.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A computer implemented method for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of a plurality of substations connected to the first side and the second side, each substation being configured to facilitate thermal energy exchange between the first side and the second side, wherein the method includes:

obtaining measurement data indicative of one or more operational parameters of the first side, wherein the measurement data is collected by means of a measurement system; and

monitoring the measurement data so as to identify operational irregularities at the interface and/or the second side.

2. The computer implemented method according to claim 1, wherein the method includes:

performing a cluster based processing in which the plurality of substations are grouped in clusters according to one or more predetermined criteria, ranking the plurality of substations in accordance with a set of key performance indicators, and selecting a first set of substations corresponding to worst-performing substations in the ranking of substations; and

performing an instance based processing in which each substation is modelled by means of a trained machine learning model, wherein the trained machine learning model is configured to provide a predicted output based on one or more inputs indicative of measurements, wherein the predicted output of the trained machine learning model is compared to a measured output, and wherein a second set of substations are selected for which the difference between the predicted output and the measured output exceeds a predetermined threshold value; and wherein substations present in the first set of substations and/or the second set of substations are identified as substations being associated to at least one faulty subsystem, the at least one faulty subsystem being located in the substation itself and/or at the second side connected to the substation.

3. The computer implemented method according to claim 1 or 2, wherein the machine learning model associated to each substation is trained with historical data captured in one or more time intervals in which said substation is not present in the first set of substation.

4. The computer implemented method according to claim 1, 2 or 3, wherein the predicted output used in the instance based processing is associated to a return temperature of heat transfer medium leaving the relevant substation towards the first side.

5. The computer implemented method according to any one of the preceding claims, wherein the trained machine learning model is a grey box model trained by means of historical data associated to the relevant substation.

6. The computer implemented method according to claim 5, wherein the grey box model includes an equivalent lumped circuit model with training parameters, such as an equivalent resistance-capacitance (RC) circuit model, wherein the equivalent lumped circuit model is employed for modelling heat exchange at at least one building at the second side.

7. The computer implemented method according to claim 5 or 6, wherein the grey box model includes a heat exchanger model with training parameters, wherein the heat exchanger model is employed for substation modelling.

8. The computer implemented method according to any one of the preceding claims, wherein the one or more inputs include at least one of a supply temperature of heat transfer medium entering the relevant substation, a flow rate of heat transfer medium exchanged with the relevant substation, an indoor temperature of a building at the relevant substation, or an outdoor temperature.

9. The computer implemented method according to any one of the preceding claims 1-4 or 8, wherein the trained machine learning model is a black box model, such as an artificial neural network model.

10. The computer implemented method according to any one of the preceding claims, wherein the predetermined criteria include at least one of a thermal power profile, supply temperature of heat transfer medium, or return temperature of heat transfer medium.

11. The computer implemented method according to any one of the preceding claims, wherein cluster based processing is performed periodically, and wherein the instance based processing is performed continuously.

12. The computer implemented method according to any one of the preceding claims, wherein the thermal energy exchange system is a district thermal energy exchange system configured to provide a collective and/or centralized heat production network for the plurality of substations.

13. A system for detecting operational irregularities in a district thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of a plurality of substations connected to the first side and the second side, each substation being configured to facilitate thermal energy exchange between the first side and the second side, wherein the system comprises a processing unit configured to:

obtaining measurement data indicative of one or more operational parameters of the first side, wherein the measurement data is collected by means of a measurement system; and
monitoring the measurement data so as to identify operational irregularities at the interface and/or the second side.

14. The system according to claim 13, wherein the processing unit comprises:

a cluster based processing module configured to group the plurality of substations in clusters according to one or more predetermined criteria, to rank the plurality of substations in accordance with a set of key performance indicators, and to select a first set of substations corresponding to worst-performing substations in the ranking of substations; and
an instance based processing module configured to model each substation by means of a trained machine learning model, wherein the trained machine learning model is configured to provide a predicted output based on one or more inputs indicative of measurements, wherein the instance based processing module is configured to compare the predicted output of the trained machine learning model to a measured output, and to select a second set of substations for which the difference between the predicted output and the measured output exceeds a predetermined threshold value; and
wherein the processing unit is configured to identify substations present in both the first and second set of substations as substations being associated to at least one faulty subsystem, the at least one faulty subsystem being located in the substation itself and/or at the second side connected to the substation.

15. A computer implemented method for training machine learning models each associated to a substation of a thermal energy exchange system with a plurality of substations for facilitating thermal energy exchange, wherein each trained machine learning model is a twin model configured to provide a predicted output based on one or more inputs indicative of measurement data, wherein the predicted output of each trained machine learning model is to be compared to a measured output associated to the relevant substation, wherein the method includes grouping the plurality of substations in clusters according to one or more predetermined criteria, ranking the plurality of substations in accordance with a set of key performance indicators, and selecting a first set of substations corresponding to worst-performing substations in the ranking of substations, and wherein training the machine learning models is performed with historical data captured in one or more time intervals in which said substation is not present in the first set of substations.

1

3

5 → 9 → 7

10

10a

10b

FIG 1

FIG 2

FIG 3

FIG 4

FIG 5

FIG 6

FIG 7A

FIG 7B

FIG 8A

FIG 8B

Europäisches
Patentamt

European
Patent Office

Office européen
des brevets

# EUROPEAN SEARCH REPORT

**Application Number**

EP 22 17 4051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SE 2 150 085 A1 (VATTENFALL AB [SE]) 21 January 2022 (2022-01-21) | 1-5,7-15 | INV.<br>G06Q10/00 |
| A | * page 1 *<br>* pages 28-29 * | 6 | F24H1/00<br>F24D10/00 |
| | ----- | | G06Q50/06 |
| Y | US 2021/262689 A1 (SHINDE PRITI [IN] ET AL) 26 August 2021 (2021-08-26) | 1-5,7-15 | |
| A | * paragraphs [0005] - [0009]; claims 1,7; figures 1-2 * | 6 | |
| | ----- | | |
| Y | WO 2018/112352 A1 (HARVARD COLLEGE [US]) 21 June 2018 (2018-06-21) | 1-5,7-15 | |
| A | * paragraphs [0044] - [0057]; claims 3-5 * | 6 | |
| | ----- | | |
| Y | US 2012/022700 A1 (DREES KIRK H [US] ET AL) 26 January 2012 (2012-01-26) | 1-5,7-15 | |
| A | * paragraphs [0003] - [0004], [0056] - [0066] * | 6 | |
| | ----- | | |

**TECHNICAL FIELDS SEARCHED (IPC)**

G06Q

The present search report has been drawn up for all claims

| Place of search | Date of completion of the search | Examiner |
|---|---|---|
| Munich | 28 October 2022 | Kerschbaumer, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 17 4051

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2022

| Patent document cited in search report | | Publication date | Patent family member(s) | | Publication date |
|---|---|---|---|---|---|
| SE 2150085 | A1 | 21-01-2022 | NONE | | |
| US 2021262689 | A1 | 26-08-2021 | NONE | | |
| WO 2018112352 | A1 | 21-06-2018 | NONE | | |
| US 2012022700 | A1 | 26-01-2012 | US 2012022700 A1 | | 26-01-2012 |
| | | | US 2014245071 A1 | | 28-08-2014 |

EPO FORM P0459

For more details about this annex : see Official Journal of the European Patent Office, No. 12/82